# EUROPEAN PATENT APPLICATION

(11) **EP 3 928 665 A1**
(43) Date of publication of application: **29.12.2021**
(21) Application number: 20181400.1
(22) Date of filing: 22.06.2020
(51) Int. Cl.: A47J 31/44

(54) **A BEVERAGE MACHINE WITH A WASTE BIN**

(71) Applicant: Koninklijke Philips N.V., 5656 AG Eindhoven (NL)
(72) Inventor: LESMAN, Fenna, 5656 AE Eindhoven (NL)
(74) Representative: Kapoor, Pavan Puneet

(57) **Abstract**

A beverage machine has a waste bin which is translationally moved into and out of a body of the machine. A pivot arrangement is also provided for pivoting the waste bin or a portion thereof thereby to reveal visually the content of the waste bin without use of the translational movement. This gives a convenient way for the user to inspect how full the waste bin is at any time.

## Description

### FIELD OF THE INVENTION

This invention relates to beverage machines which make a beverage product, which may be provided in the form of a container (capsule or pod) or as a powder (e.g. ground coffee). In particular, the invention relates to beverage machines which have a waste bin for collecting a waste part of the beverage product.

### BACKGROUND OF THE INVENTION

Beverage producing systems using disposable beverage capsules or pods are commonly used for preparing coffee-based beverages or other beverages (such as soup). Fully automatic coffee machines are also known which incorporate an internal grinder, and deliver ground coffee to a brewing chamber.

In all of these types of beverage machine, there is a waste product, in the form of an empty container (capsule or pod) or a used coffee cake.

For example, in a capsule-based or pod-based based machine, a capsule or pod is typically introduced into a brewing chamber, pierced on the top and on the bottom, and the beverage is extracted by flowing hot and pressurized water through the capsule or pod. Depending upon the kind of the beverage to be produced, the water pressure, temperature and the flow rate are designed to produce the desired beverage quality.

By way of example, brewing espresso coffee requires flowing hot and pressurized water through the capsule or pod containing coffee powder. Water is usually fed into the capsule or pod at a low flow rate and at a high pressure around IMPa.

Some or all of the brewing parameters may be adjustable as different settings of a beverage machine, or they may be fixed for a beverage machine which is for receiving a particular capsule or pod design for making a particular type of beverage. Thus, different machines may be designed for different types of beverage (such as an espresso coffee machine), or else beverage machines may have different settings for different beverage types.

In all cases, the used capsules or pods are typically collected in a waste bin, which collects a number of capsules or pods before it needs to be emptied. Similarly, spent coffee cakes of an automatic coffee machine are delivered to a waste bin.

Typically, the user will wish to check periodically whether or not the waste bin is full. This can be done by making the bin transparent or translucent, or by applying holes so that the user can see if the bin is reaching fullness, for example by seeing the capsules or pods in the bin. This is however not very attractive because of the visible dirt and coffee.

If the waste bin is not transparent, the normal approach is to visually check the fullness of the waste bin, e.g. the general quantity of capsules or pods in the waste bin, by removing the waste bin. The waste bin is typically mounted on a waste water collector and/or a drip tray. These may be removed as a combined unit, or the waste bin may be removed leaving the drip tray and/or waste water collector in place.

The need to remove the waste bin to inspect if it is full is inconvenient for the user.

### SUMMARY OF THE INVENTION

The invention is defined by the claims.

According to examples in accordance with an aspect of the invention, there is provided a beverage machine, comprising:
a beverage receiving area for receiving a beverage product;
a hot water supply system for supplying hot water to the beverage product in the beverage receiving area;
a beverage delivery unit for delivering a beverage formed by passing the hot water though the beverage product;
a waste bin for collecting beverage product waste;
a waste bin receiving area for receiving the waste bin by a translational movement; and
a pivot arrangement for pivoting the waste bin or a portion thereof thereby to reveal visually the content of the waste bin without translational movement of the waste bin.

This beverage machine has two arrangements for moving the waste bin. The pivot arrangement enables the waste bin (or a portion thereof) to be tilted to the front so that the content can be seen by the user, without removing the entire waste bin (or indeed a waste water collector or a drip tray). The waste bin can therefore be opaque and have any desired aesthetic appearance. The tilting is separate to the translational movement, e.g. sliding, used to remove the waste bin. Thus, a separate inspection function is provided which does not need the waste bin to be removed or even partially removed from the machine.

In one set of examples, the beverage product comprises a beverage container such as a capsule or pod and the beverage product waste comprises the emptied container. Thus, the invention may be applied to the waste capsule bin or waste pod bin of a capsule-based or pod-based beverage machine, e.g. a coffee capsule or coffee pod machine.

In another set of examples, the beverage product comprises ground coffee and the beverage product waste comprises a used coffee cake. The ground coffee is for example delivered to the beverage receiving area from an internal coffee grinder. This applies to a fully automatic coffee machine which creates individual portions of ground coffee from a reservoir of coffee beans.

The waste bin is for example slidably insertable into, and slidably removable from, the waste bin receiving area. There may be guide rails or tracks, or else the shape of the waste bin may simply be a sliding fit (or a lift and slide fit) into the waste bin receiving area.

The waste bin may have a front wall, wherein the pivot arrangement is for pivoting open the front wall or a portion thereof. This then enables inspection by an opening that is created between the top of the front wall or front wall portion and the remainder of the waste bin. This avoids the need to move the general structure of the waste bin.

The front wall or front wall portion is for example coupled to side walls which maintain a closed vessel base when the front wall or portion thereof is pivoted open. Thus, opening the front wall of front wall portion will not let used capsules/pods/coffee cake fall out. The side walls for example slide in and out of lateral guides thus maintaining solid side walls to the waste bin, but with adjustable size and shape.

The pivot arrangement for example comprises a living (integral) hinge. This provides a low cost solution with no additional parts. The integral hinge may for instance be formed at a base region of the front wall.

The pivot arrangement may instead be for pivoting the entire waste bin.

In all examples, the translational movement may be possible without first performing the pivot operation. Thus, the translational movement may be possible with or without first operating the pivot arrangement.

Alternatively, the translational movement may be for possible only after operating the pivot arrangement.

For example, the waste bin or a portion of the waste bin may have to be pivoted before the waste bin is able to move translationally, i.e. a sliding movement is locked until the pivoting is carried out. In this case, the pivoting may be considered to be a first phase of the waste bin removal process. The second phase of sliding can be carried out if it proves to be necessary upon visual inspection.

Thus, the pivot arrangement may be for implementing a first stage of a waste bin removal operation and the translational movement is for implementing a second stage of the waste bin removal operation. The first stage and second stages of the waste bin removal operation may be implemented in sequence by a continuous application of a waste bin removal force by the user.

In this way, the inspection and emptying processes is not made more complicated; the user just pulls on the waste bin. They may stop when the pivoting reveals the contents or they may carry on.

The beverage machine may further comprise a support, wherein the waste bin is mounted on the support, wherein the pivot arrangement is for pivoting only the waste bin or a portion thereof without movement of the support, and the translational movement is for moving the support and the waste bin as a unit.

Thus, the pivoting does not disturb the support, whereas the translational movement sliding is to remove the support with the waste bin.

The support may for example comprise a vessel support portion for supporting a vessel to receive the beverage. The support may additionally comprise a rear support portion for supporting the waste bin.

The support may further comprise a drip tray, optionally with a drip tray cover. The support may further comprise a waste water collector. Different combinations of drip tray and waste water collector are possible; they may be combined as one unit.

The beverage machine for example comprises a coffee machine such as an espresso coffee machine.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a capsule-based beverage machine, such as an espresso coffee machine;
Figure 2 shows one example of implementation of a beverage machine in accordance with the invention;
Figure 3 shows the waste bin after the front wall has been tilted forwards;
Figure 4 shows how the waste bin is slid out in the manner of a drawer after the contents have been inspected;
Figure 5 shows in schematic form, from the side, how the waste bin removal functions for the example of Figures 2 to 4;
Figure 6 shows in schematic form, from the side, how the waste bin removal functions for a first alternative example; and
Figure 7 shows in schematic form, from the side, how the waste bin removal functions for a second alternative example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a beverage machine which has a waste bin which is translationally moved into and out of a body of the machine. A pivot arrangement is also provided for pivoting the waste bin or a portion thereof thereby to reveal visually the content of the waste bin without use of the translational movement. This gives a convenient way for the user to inspect how full the waste bin is at any time.

As explained above, the invention may be applied to any beverage machine in which waste product is collected in a waste bin. The invention will be described with reference to a capsule-based beverage machine, purely by way of example.

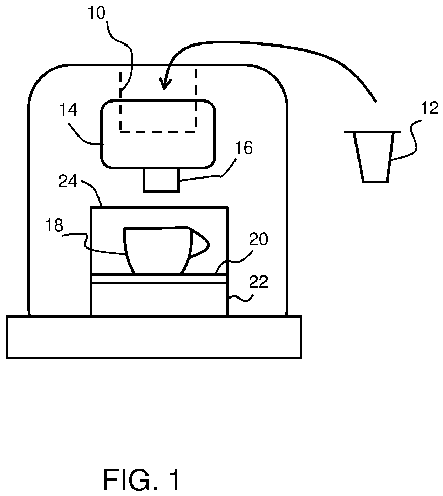

Figure 1 shows a capsule-based beverage machine, such as an espresso coffee machine.

The coffee machine comprises a beverage receiving area, in this case a capsule receiving area 10, for receiving a beverage product, in this case a capsule 12, containing a beverage to be mixed with, or infused into, water, namely coffee grounds in the case of a coffee capsule.

The machine has a hot water supply system (not shown) for supplying hot water to a beverage product in the beverage receiving area, hence in this example to a capsule in the capsule receiving area. The hot water supply system comprises a water reservoir, a heater and a pump, and a suitable flow control arrangement for example including valves. The components of the machine are controlled by a controller.

A beverage delivery unit 14 is for delivering a beverage formed by passing the hot water though the capsule. The beverage is for example delivered from a spout 16 to a vessel 18 which stands on a drip tray cover 20 over a drip tray 22.

After use, beverage product waste, in this case spent capsules, are collected in a waste bin 24, in this case a waste capsule bin. This is a collection chamber internal to the machine, but which can be removed for emptying and cleaning. The waste bin 24 is mounted in a receiving area of the machine, in particular a waste bin receiving area 25. The waste bin receiving area is for receiving the waste bin by a translational movement. This movement may simply be defined by the shape of the waste bin and the shape of the waste bin receiving area. For example, the waste bin may slide in and out freely or on a separate slide arrangement for assisting sliding insertion of the waste bin into, and sliding removal of the waste bin from, the waste bin receiving area.

The waste bin 24 for example slides in and out of the waste bin receiving area in the manner of a drawer. The waste bin 24 for example pulls out as a unit together with the drip tray 22 and drip tray cover 20. There may be an additional waste water collector, for example beneath the waste bin 24, or else a waste water collector may be combined with the drip tray. The waste water collector may also pull out with the waste bin as part of a combined unit.

Alternatively, different parts may be removable separately. For example, the waste bin may instead be removed leaving the drip tray cover and drip tray in place.

The drip tray cover 20 functions as a support for the vessel 18. It may be mounted directly on top of the drip tray, but it may also be raised above the the drip tray.

To the extent described above, the coffee machine is conventional. The invention may be applied to any type of beverage machine, in which there is a removable waste bin for collecting waste beverage produce, such as multiple spent capsules in this particular example. The waste bin for example has a capacity to collect between 5 and 30 waste capsules or pods. The general coffee making function is entirely conventional and will not be described in detail.

According to the invention, there is a pivot arrangement for pivoting the waste bin 24 or a portion thereof thereby to reveal visually the content of the waste bin without translationally moving it out (i.e. sliding it out) from the body of the beverage machine, e.g. coffee machine.

The beverage machine thus has two arrangements for moving the waste bin. The pivot arrangement enables the waste bin (or a portion thereof) to be tilted to the front so that the content can be seen by the user, without removing the entire waste bin (or indeed the drip tray or waste water collector).

The externally visible part of the waste bin can therefore be opaque and have any desired aesthetic appearance. A dedicated inspection function is provided for examining the fullness of the waste bin, which does not need the waste bin to be removed or partially removed from the machine.

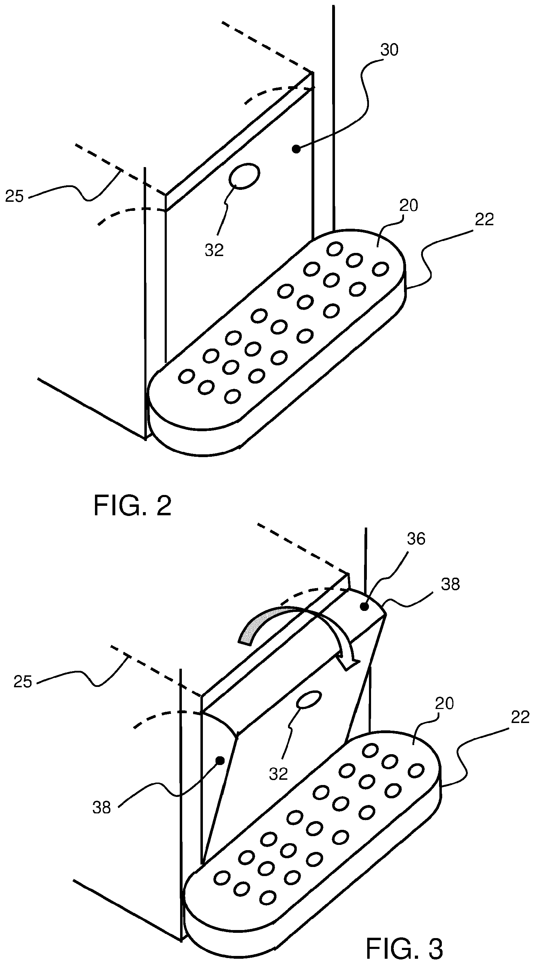

Figure 2 shows one example of implementation. It shows a portion of the front face of the coffee machine, below the spout 16.

The waste bin 24 has a front wall 30 and a pull handle or finger hole 32. The pivot arrangement is for pivoting open the front wall such that a gap is formed at the top. Alternatively (not shown), only a portion of the front wall may be pivoted open, e.g. an upper half of the front wall, or a hatch arranged around handle 32. This then enables inspection through the gap. The illustrated pivot axis is across the waste bin, i.e. generally horizontal in normal use. In alternative, less preferred embodiments, the pivot axis may have a different orientation, e.g. vertical or diagonal. This pivoting avoids the need to move the general structure of the waste bin to inspect the contents. The waste bin 24 is received in the waste bin receiving area 25.

Figure 3 shows the waste bin 24 after the front wall 30 has been tilted forwards at the top (about a hinge line across the bottom) to create a viewing gap 36. Preferably, the front wall 30 is coupled to side walls 38, as illustrated, which maintain a container which is closed beneath the top, i.e. a closed vessel base, when the front wall 30 is pivoted open. Thus, opening the front wall will not let used waste (i.e. empty capsules in this example) fall out of a created gap. The side walls 38 for example slide in and out of lateral guides thus maintaining solid side walls to the waste bin, but with adjustable shape.

The pivot arrangement for example comprises an integral hinge (i.e. a living hinge requiring no additional components). This provides a low cost solution with no additional parts. Of course, a separate hinge arrangement may be provided. The pivot arrangement may for example be formed at a base region of the front wall, as illustrated.

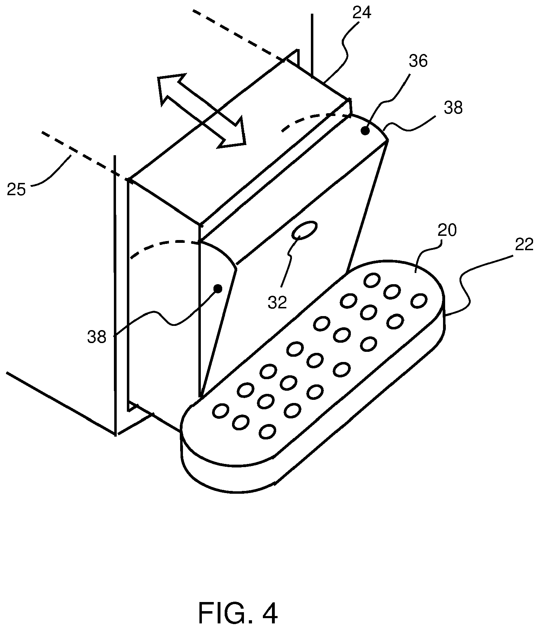

Figure 4 shows how the waste bin 24 is slid out in the manner of a drawer after the contents have been inspected. In this example, the waste bin 24, drip tray 22 and drip tray cover 20 slide as a unit.

In this example, the waste bin is shown being slid out with the front wall in the pivoted open state. The translational movement may for example be locked until the front wall is in the pivoted open state. For this purpose, pivoting open the front wall may release a catch which inhibits the translational, sliding, motion. In this way, the pivoting may be considered to be a first phase of the waste bin removal process. The second phase of sliding can be carried out if it proves to be necessary upon visual inspection.

Both phases may however simply involve pulling on the waste bin. The sequence of first stage and second stage may thus be implemented by a continuous application of a waste bin removal force by the user.

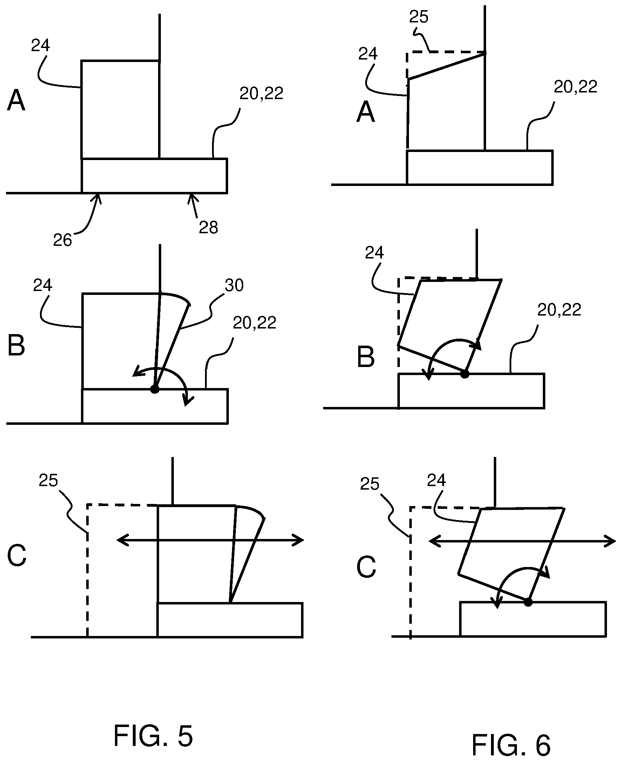

Figure 5 shows in schematic form, from the side, how the waste bin removal is achieved for the example of Figures 2 to 4. The top image shows the waste bin 24 in the waste bin receiving area. The middle image shows the result of the pivot operation, to open the front wall. The bottom image shows the sliding of the waste bin out of the waste bin receiving area 25, with the drip tray and drip tray cover.

The waste bin 24 is mounted on top of a rear support portion 26 and there is a vessel support potion 28 for supporting a vessel at which the drip tray cover 20 is mounted. The portions 26, 28 thus together define a support. The waste bin can be lifted off the support for empting and cleaning.

Figure 6 shows in schematic form, from the side, how the waste bin removal may be implemented for a first alternative example.

In this example, the waste bin 24 as a whole pivots forward. The top image shows the waste bin 24 in the waste bin receiving area 25. The middle image shows the result of the pivot operation, to tip the whole waste bin forward, but with the drip tray and drip tray cover static. The bottom image shows the sliding of the waste bin out of the waste bin receiving area 25 with the drip tray.

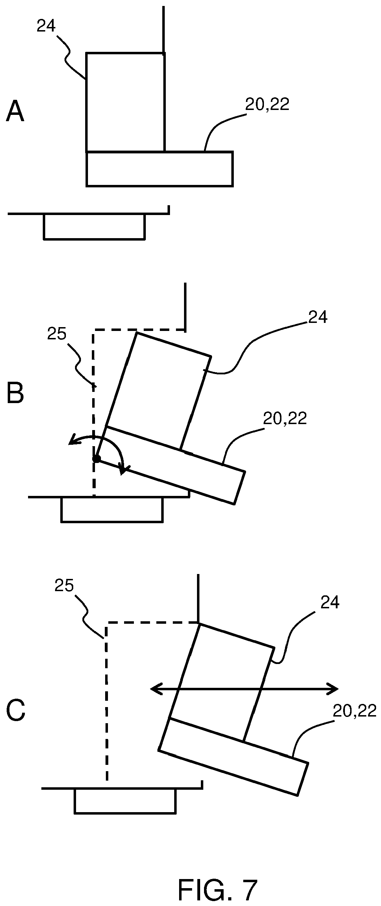

Figure 7 shows in schematic form, from the side, how the waste bin removal may be implemented for a second alternative example.

In this example, the waste bin 24 and also the drip tray and drip tray cover as a whole pivot forward. The top image shows the waste bin 24 in the waste bin receiving area 25. The middle image shows the result of the pivot operation, to tip the whole waste bin and the coupled drip tray forward. The bottom image shows the sliding of the waste bin out of the waste bin receiving area 25 with the drip tray.

In all examples, the pivoting may need to be completed before the sliding is performed, as described above.

Alternatively, and again in all examples, the sliding may be possible without first performing the pivot operation, or after having pivoted back the waste bin (or part thereof) to its original position. Thus, the slide arrangement may be operable with or without first operating the pivot arrangement. There may then be separate actuators (handles or levers) for the pivot function and for the waste bin removal function.

As explained above, the waste bin may be for capsules, pods or spent coffee cakes.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A beverage machine, comprising:
a beverage receiving area (10) for receiving a beverage product;
a hot water supply system for supplying hot water to the beverage product in the beverage receiving area;
a beverage delivery unit (14,16) for delivering a beverage formed by passing the hot water though the beverage product;
a waste bin (24) for collecting beverage product waste;
a waste bin receiving area (25) for receiving the waste bin by a translational movement; and
a pivot arrangement for pivoting the waste bin or a portion thereof thereby to reveal visually the content of the waste bin without translational movement of the waste bin.

2. The beverage machine of claim 1, wherein:
the beverage product comprises a beverage container such as a capsule or pod and the beverage product waste comprises the emptied container; or
the beverage product comprises ground coffee and the beverage product waste comprises a used coffee cake.

3. The beverage machine of claim 1 or 2, wherein the waste bin is slidably insertable into, and slidably removable from, the waste bin receiving area/

4. The beverage machine of any one of claims 1 to 3, wherein the waste bin has a front wall (30), wherein the pivot arrangement is for pivoting open the front wall or a portion thereof.

5. The beverage machine of claim 4, wherein the front wall or front wall portion is coupled to side walls (38) which maintain a closed vessel base when the front wall or front wall portion is pivoted open.

6. The beverage machine of claim 4 or 5, wherein the pivot arrangement comprises a living hinge.

7. The beverage machine of any one of claims 1 to 3, wherein the pivot arrangement is for pivoting the entire waste bin (24).

8. The beverage machine of any one of claims 1 to 7, wherein the waste bin is translationally movable out of the waste bin receiving area:
with or without first operating the pivot arrangement; or
only after operating the pivot arrangement.

9. The beverage machine of claim 8, wherein the pivot arrangement is for implementing a first stage of a waste bin removal operation and the translational movement is for implementing a second stage of the waste bin removal operation.

10. The beverage machine of claim 9, wherein the first stage and second stages of the waste bin removal operation are implemented in sequence by a continuous application of a waste bin removal force by the user.

11. The beverage machine of any one of claims 1 to 10, further comprising a support, wherein the waste bin (24) is mounted on the support, wherein the pivot arrangement is for pivoting only the waste bin or a portion thereof without movement of the support, and the translational movement is for moving the support (26,28) and the waste bin (24) as a unit.

12. The beverage machine of claim 11, wherein the support comprises a vessel support portion (28) for supporting a vessel to receive the beverage and a rear support portion (26), wherein the waste bin (24) is mounted on the rear support portion (26).

13. The beverage machine of claim 11 or 12, wherein the support comprises a drip tray (22), optionally with a drip tray cover (20).

14. The beverage machine of claim 11, 12 or 13, wherein the support comprises a waste water collector.

15. The beverage machine of any one of claims 1 to 14, comprising a coffee machine such as an espresso coffee machine.
